(19) Europäisches Patentamt
European Patent Office
Office européen des brevets

(11) Veröffentlichungsnummer: **0 649 885 A1**

# (12) EUROPÄISCHE PATENTANMELDUNG

(21) Anmeldenummer: **94116548.2**

(51) Int. Cl.⁶: **C09C 1/30**

(22) Anmeldetag: **20.10.94**

(30) Priorität: **25.10.93 DE 4336345**
**20.01.94 DE 4401598**

(43) Veröffentlichungstag der Anmeldung:
**26.04.95 Patentblatt 95/17**

(84) Benannte Vertragsstaaten:
**BE DE ES FR GB IT NL**

(71) Anmelder: **Wacker-Chemie GmbH**
**Hanns-Seidel-Platz 4**
**D-81737 München (DE)**

(72) Erfinder: **Barthel, Herbert, Dr.**
**Lessingstrasse 13**
**D-84547 Emmerting (DE)**
Erfinder: **Achenbach, Frank, Dr.**
**Maria-Ward-Strasse 52**
**D-84359 Simbach am Inn (DE)**

## (54) Übergangsmetallhaltige hydrophobe Kieselsäure.

(57) Die übergangsmetallhaltige hydrophobe Kieselsäure weist eine spezifische BET-Oberfläche von 40 bis 450 $m^2/g$, einen durch die Hydrophobierung erhaltenen Kohlenstoffgehalt von mindestens 0,5 Gew.-% und einen Gehalt an Übergangsmetall von 10 bis 10 000 Gew.-ppm auf. Die hydrophobe Kieselsäure wird als Hitzestabilisator in additionsvernetzenden 2-Komponenten Siliconkautschukmassen eingesetzt.

EP 0 649 885 A1

Die Erfindung betrifft übergangsmetallhaltige hydrophobe Kieselsäure, deren Herstellung und additionsvernetzende 2-Komponenten Siliconkautschukmassen, die diese Kieselsäure als Hitzestabilisator enthalten.

Als Hitzestabilisatoren für additionsvernetzende 2-Komponenten Siliconkautschukmassen sind Metallverbindungen, wie Metallsalze, und metallorganische Verbindungen bekannt. Beispielsweise beschreibt die EP-A-231 519 den Einsatz von Acetylacetonaten von Kupfer, Zink, Aluminium, Eisen, Cer, Zirkon und Titan. Derartige Metallverbindungen sind mit dem hydrophoben Siliconpolymer wenig verträglich und verteilen sich aufgrund schlechter Einmischbarkeit in den Siliconkautschukmassen nicht homogen. Speziell die Chelate, wie die Acetylacetonate, verteilen sich besser in den Siliconkautschukmassen, führen jedoch zur Inhibierung der Platinmetallkomplexe, folglich zu verringerter Vulkanisationsgeschwindigkeit und mangelnder Vernetzung. Farbige Metallverbindungen verfärben die Siliconkautschuke. Beim Vulkanisieren und bei der Temperaturbelastung treten Verfärbungen und Trübungen durch Bildung von Metallhydroxiden und -oxiden aufgrund von Inhomogenitäten auf.

Aus der JP-A-53058557 sind additionsvernetzende Siliconkautschukmassen bekannt, die als Hitzestabilisator Ferrit aufweisen, welcher Oxide anderer Metalle enthält. Die zur Hitzestabilisierung erforderlichen Ferritmengen führen zu Verfärbungen und mangelnder Transparenz und können nicht gemeinsam mit dem hydrophoben Füllstoff in die Siliconkautschukmassen eingearbeitet werden, da der Ferrit gröber anfällt.

In der US-A-4,360,388 ist die Verwendung von Cer-haltiger hydrophiler Fällungskieselsäure zur Hitzestabilisierung von heißvulkanisierendem Siliconkautschuk beschrieben. In der US-A-4,164,509 ist die Hydrophobierung von pyrogener Kieselsäure mit Titantetrabutylat beschrieben. Die Hydrophobierung ist jedoch nicht permanent; in Kontakt mit heißem Wasser geht die Nichtbenetzbarkeit mit Wasser verloren. Die vorstehenden metallhaltigen Kieselsäuren stellen keinen aktiv verstärkenden Füllstoff dar und erhöhen somit unerwünscht die Füllstoff-Beladung des Siliconkautschuks, ohne zur Verbesserung der mechanischen Eigenschaften beizutragen. Als hydrophiler Füllstoff können sie zu unerwünschten Änderungen der rheologischen Eigenschaften des Siliconkautschuks führen. Die metallhaltigen Kieselsäuren müssen in einem zusätzlichen Dispergierschritt neben der Einarbeitung des verstärkenden Kieselsäure-Füllstoffs homogen im Siliconpolymer verteilt werden. Die metallhaltigen Kieselsäuren führen im Siliconkautschuk zu Verfärbungen und Trübungen.

Es bestand die Aufgabe, einen besonders wirksamen Hitzestabilisator für additionsvernetzende 2-Komponenten Siliconkautschukmassen bereitzustellen, der mit möglichst geringem Aufwand in die Siliconkautschukmassen eingearbeitet werden kann und der weder zu Verfärbungen noch zu Trübungen des Siliconkautschuks führt.

Gegenstand der Erfindung ist eine hydrophobe Kieselsäure mit einer spezifischen BET-Oberfläche von 40 bis 450 $m^2/g$, einem durch die Hydrophobierung erhaltenen Kohlenstoffgehalt von mindestens 0,5 Gew.-% und einem Gehalt an Übergangsmetall von 10 bis 10 000 Gew.-ppm.

Die spezifische Oberfläche der Kieselsäure wird nach der BET-Methode durch Stickstoffadsorption gemäß ASTM Special Technical Publication No. 51, 1941, S. 95 ff und DIN 66131 / 66132 bestimmt.

Die erfindungsgemäße Kieselsäure zeigt bei der Verwendung als Hitzestabilisator in additionsvernetzenden 2-Komponenten Siliconkautschukmassen nachstehende Vorteile gegenüber bekannten Hitzestabilisatoren:

Die erfindungsgemäße Kieselsäure ist zugleich Hitzestabilisator und aktiv verstärkender Füllstoff und kann deshalb homogen in die Siliconkautschukmassen eingemischt werden. Die Einarbeitung des Füllstoffs und des Hitzestabilisators in die Siliconkautschukmassen kann deshalb in einem Schritt erfolgen. Als Hitzestabilisator ist keine zusätzliche Metallverbindung erforderlich; es werden daher keine zusätzlichen störenden oder verdünnenden Lösungsmittel oder Lösungsvermittler, keine freien und somit störenden Gegenionen, wie Chlorid oder Sulfat der Metallverbindung und keine komplexierend wirkenden Bestandteile in die Siliconkautschukmassen eingebracht.

Die Wirkung der gleichen Menge eines Übergangsmetalls als Hitzestabilisator ist erhöht gegenüber einem getrennten Einsatz von Übergangsmetallverbindung und hydrophober Kieselsäure und gegenüber hydrophiler übergangsmetallhaltiger Kieselsäure. Der mit der erfindungsgemäßen Kieselsäure versetzte Silikonkautschuk zeigt bei Temperaturbelastung sowohl eine geringere Beeinträchtigung der mechanischen Eigenschaften als auch einen geringeren Masseverlust.

Auch das Nichtauftreten von Verfärbungen der erfindungsgemäßen Kieselsäure bei der Oberflächenbehandlung der feinstteiligen Kieselsäure mit einer flüssigen oder löslichen Übergangsmetallverbindung unter gleichzeitiger Hydrophobierung mit einer Organosiliciumverbindung ist unerwartet. Während die Silikate vieler Metallverbindungen intensiv gefärbt bzw. schwarz sind und die Oberflächenbehandlung von Kieselsäure mit löslichen oder flüssigen Metallverbindungen in vielen Fällen ebenfalls zu farbigen Pulvern führt, sind die erfindungsgemäßen Kieselsäuren weiße, pulverförmige Produkte, die nach Einarbeiten in die Siliconkautschukmasse auch nach längerer Temperaturbelastung weitgehend transparente und unverfärbte

Vulkanisate ergeben.

Als Übergangsmetalle in der erfindungsgemäßen Kieselsäure bevorzugt sind Cer, Eisen, Hafnium, Kupfer, Zink, Mangan, Nickel, Titan und Zirkon. Die Kombination aus Kupfer und Zink ist ebenfalls bevorzugt.

Der mittlere Primärteilchendurchmesser der erfindungsgemäßen Kieselsäure beträgt höchstens 10 $\mu$m, vorzugsweise 5 bis 50 nm.

Der Gehalt an Übergangsmetall in der erfindungsgemäßen Kieselsäure beträgt vorzugsweise 100 bis 6000 Gew.-ppm.

Der Kohlenstoffgehalt der erfindungsgemäßen Kieselsäure ist ein Maß für die Belegung von deren Oberfläche mit Hydrophobierungsmittel. Er beträgt vorzugsweise 1 bis 10, insbesondere 2 bis 6 Gew.-%.

Gegenstand der Erfindung ist auch ein Verfahren zur Herstellung der erfindungsgemäßen Kieselsäure, bei dem eine hydrophile Kieselsäure mit

a) einer flüssigen oder in Wasser oder einem organischen Lösungsmittel gelösten Übergangsmetallverbindung und

b) einem organischen oder siliciumorganischen Hydrophobierungsmittel

vermischt wird.

Als Kieselsäure wird vorzugsweise pyrogene oder gefällte Kieselsäure eingesetzt.

Beispiele für in Wasser lösliche Übergangsmetallverbindungen sind deren Salze, wie die Sulfate, Nitrate und Halogenide, insbesondere die Chloride, sowie die Acetate, Formiate und Oxalate. Bevorzugte Beispiele sind Cer(III)nitrat, Cer(III)chlorid, Cer(IV)sulfat, Eisen(II)sulfat, Eisen(II)oxalat, Eisen(III)nitrat, Eisen(III)chlorid, Hafnium(IV)oxidchlorid, Kupfer(II)sulfat, Kupfer(II)nitrat, Kupfer(II)chlorid, Kupfer(II)acetat, Mangan(II)sulfat, Mangan(II)nitrat, Mangan(II)chlorid, Mangan(II)acetat, Nickel(II)chlorid, Nickel(II)nitrat, Nickel(II)sulfat, Nickel-(II)acetat, Titan(III)chlorid in 10 %iger Salzsäure und Zirkon(IV)oxidchlorid.

Beispiele für in organischen Lösemitteln lösliche Übergangsmetallverbindungen sind deren Acetylacetonate, insbesondere Tris(acetylacetonat)eisen(III), Bis(acetylacetonat)mangan(II), Diisopropoxy-bis-(acetylacetonat)titan(IV), Tetrakis(acetylacetonat)titan(IV), Bis(acetylacetonat)titan(IV)oxid und Tetrakis-(acetylacetonat)zirkon(IV).

Organische Lösungsmittel oder Lösungsmittelgemische mit einem Siedepunkt bzw. Siedebereich von bis zu 120 °C bei 0,1 hPa werden bevorzugt eingesetzt. Beispiele für solche Lösungsmittel sind Alkohole, wie Methanol, Ethanol, n-Propanol, iso-Propanol; Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Cyclohexan, Heptan, Oktan, Waschbenzin, Petrolether, Benzol, Toluol, Xylole; Ketone, wie Aceton, Methylethylketon, Methyl-isobutylketon; inerte Organosiliciumverbindungen, wie Siloxane, beispielsweise Hexamethyldisiloxan; Schwefelkohlenstoff und Nitrobenzol, oder Gemische dieser Lösungsmittel.

Als bei Raumtemperatur bis 170 °C flüssige Übergangsmetallverbindungen können beispielsweise eingesetzt werden die Halogenverbindungen des Titan(IV), des Zirkon(IV) und des Hafnium(IV), insbesondere Titan(IV)chlorid und Zirkon(IV)chlorid, sowie Organometallverbindungen wie die Alkylalkoholate des Titan-(IV), Zirkon(IV) und Hafnium(IV) mit Alkylresten des Alkohols von 1 bis 8 C-Atomen. Beispiele sind insbesondere Tetra-iso-propoxytitanat, Tetra-n-butoxytitanat, Tetra-iso-propoxyzirkonat und Tetra-n-butoxyzirkonat. Die Alkoholate des Titan(IV), Zirkon(IV) und Hafnium(IV) können gegebenenfalls mit inerten Lösemitteln verdünnt werden. Beispiele für solche inerten Lösemittel sind die den jeweiligen Alkylalkoholaten entsprechenden Alkylalkohole wie iso-Propanol oder n-Butanol sowie die vorstehend angeführten Kohlenwasserstoffe und inerten Organosiliciumverbindungen.

Die Oberflächenbehandlung des Füllstoffs mit der Übergangsmetallverbindung erfolgt durch intensives Vermischen der beiden Komponenten. Dies kann vorzugsweise durchgeführt werden bei Temperaturen von 5 °C bis höchstens der Siedetemperatur des verwendeten Lösemittels oder der gegebenenfalls niedriger siedenden eingesetzten flüssigen Übergangsmetallverbindung. Die Belegung erfolgt im allgemeinen bei Normaldruck und in einem Zeitraum von 30 Sekunden bis 24 Stunden, insbesondere in 5 Min. bis 120 Min.

Die Kieselsäure wird vorzugsweise mit einer Organosiliciumverbindung hydrophobiert. Als Organosiliciumverbindung wird dabei bevorzugt solche der Formel

$$R^1_{4-x}SiA_x$$

oder

$(R^1_3\,Si)_yB$ ,

worin $R^1$ gleich oder verschieden ist, einen einwertigen, gegebenenfalls halogensubstituierten Kohlenwasserstoffrest mit 1 bis 18 Kohlenstoffatomen je Rest,
A Halogen, -OH, $-OR^2$ oder $-OCOR^2$,
B

$$NR^3_{3-y},$$

$R^2$ einen einwertigen Kohlenwasserstoffrest mit 1 bis 12 Kohlenstoffatomen je Rest,
$R^3$ ein Wasserstoffatom ist oder die gleiche Bedeutung wie $R^1$ hat,
x 1, 2 oder 3 und
y 1 oder 2 bedeutet,
oder Organo(poly)siloxane aus Einheiten der Formel

$R^1_z\,zSiO_{(4-z)/2}$ ,

wobei $R^1$ die oben dafür angegebene Bedeutung hat und z 1, 2 oder 3 bedeutet, verwendet.

Beispiele für Reste $R^1$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Oktadecylreste, wie der n-Oktadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; und Aralkylreste, wie der Benzylrest, der alpha- und der $\beta$-Phenylethylrest. Beispiele für halogensubstituierte Kohlenwasserstoffreste sind mit Fluor-, Chlor- und Bromatomen substituierte Alkylreste, wie der 3,3,3-Trifluor-n-propylrest, der 2,2,2,2',2',2'-Hexafluorisopropylrest, der Heptafluorisopropylrest und der Perfluorhexylethylrest. Ein bevorzugtes Beispiel für $R^1$ ist der Methylrest.

Beispiele für Reste $R^2$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Arylreste, wie der Phenylrest; Alkarylreste, wie o-, m-, p-Tolylreste und Aralkylreste, wie der Benzylrest. Bevorzugte Beispiele für $R^2$ sind der Methyl- und Ethylrest.

Beispiele für Organosiliciumverbindungen sind Alkylchlorsilane, wie Methyltrichlorsilan, Dimethyldichlorsilan, Trimethylchlorsilan, Octyltrichlorsilan, Octadecyltrichlorsilan, Octylmethyldichlorsilan, Octadecylmethyldichlorsilan, Octyldimethylchlorsilan, Octadecyldimethylchlorsilan, tert.-Butyldimethylchlorsilan; Alkylalkoxysilane, wie Dimethyldimethoxysilan, Dimethyldiethoxysilan, Trimethylmethoxysilan und Trimethylethoxysilan; Trimethylsilanol; cyclische Diorgano(poly)siloxane, wie cyclische Dimethyl(poly)siloxane und lineare Diorganopolysiloxane, wie durch Trimethylsiloxygruppen endblockierte Dimethylpolysiloxane und endständige Hydroxy- oder Alkoxygruppen aufweisende Dimethylpolysiloxane; Disilazane, wie Hexaalkyldisilazan, insbesondere Hexamethyldisilazan, Divinyltetramethyldisilazan, Bis(trifluorpropyl)tetramethyldisilazan und cyclische Dimethylsilazane, wie Cyclohexamethyltrisilazan.

Insbesondere nützlich als Hydrophobierungsmittel sind niedermolekulare Cyclosiloxane, wie Octamethylcyclotetrasiloxan, kurzkettige SiOH-endständige Dimethylpolysiloxane mit einer Kettenlänge im Bereich von 2 bis 20, Silazane, wie Hexamethyldisilazan und 1,3-Divinyl-1,1,3,3-tetramethyldisilazan, Chlorsilane, wie Dimethyldichlorsilan.

Es können auch Gemische unterschiedlicher Organosiliciumverbindungen eingesetzt werden.

Die Oberflächenbehandlung der Kieselsäure mit der Organosiliciumverbindung erfolgt im gleichen Schritt wie die Oberflächenbehandlung mit der Übergangsmetallverbindung oder in einem zweiten anschließenden Schritt durch intensives Vermischen der Komponenten und kann durchgeführt werden bei Temperaturen von 5 ° C bis 350 ° C, insbesondere bei 15 bis 200 ° C. Die Hydrophobierung erfolgt im allgemeinen bei Normaldruck und in einem Zeitraum von 30 Sekunden bis 24 Stunden, bevorzugt 5 Min. bis 120 Min.

Die Oberflächenbehandlung der Kieselsäure mit der Organosiliciumverbindung und der Übergangsmetallverbindung kann durch tropfenweises oder feinstverteiltes Einbringen der flüssigen oder gelösten Komponenten in das fluidisierte oder durch Rühren bewegte Kieselsäure-Pulver erfolgen bzw. durch

Zugabe der Organosiliciumverbindung und der Übergangsmetallverbindung in eine ruhende oder bewegte und gerührte Suspension der Kieselsäure erfolgen. Als Lösemittel zur Supendierung können alle inerten organischen Lösemittel dienen, insbesondere die vorstehend aufgeführten, aliphatischen und aromatischen Kohlenwasserstoffe und bei Behandlungstemperatur flüssige Organosiliciumverbindungen.

Der Schritt der Belegung mit Metallverbindung und Organosiliciumverbindung kann direkt anschließend oder nach einer Reaktionsphase von vorzugsweise 30 Sekunden bis 24 Stunden, insbesondere 5 Min. bis 60 Min., bei vorzugsweise 5°C bis 150°C, insbesondere 30°C bis 90°C, gefolgt sein von einem Ausheizvorgang bei 100°C bis 450°C, insbesondere 150°C bis 300°C, mit einer Dauer des Ausheizvorganges von 1 Min bis 12 Stunden, vorzugsweise 10 Min. bis 3 Stunden.

Sowohl Belegung als auch Ausheizen können sowohl kontinuierlich als auch diskontinuierlich betrieben werden.

Gegenstand der Erfindung sind auch additionsvernetzende 2-Komponenten Siliconkautschukmassen, die die erfindungsgemäße Kieselsäure als Hitzestabilisator enthalten.

Die erfindungsgemäßen Siliconkautschukmassen umfassen die Bestandteile:

(I) erfindungsgemäße Kieselsäure,
(II) Polyorganosiloxan mit mindestens zwei Alkenylgruppen pro Molekül,
(III) Polyorganosiloxan mit mindestens zwei SiH-Gruppen pro Molekül und
(IV) Hydrosilylierungskatalysator.

Die beiden Komponenten der erfindungsgemäßen Siliconkautschukmassen können die Bestandteile I bis IV und gegebenenfalls weitere Zusätze in beliebigen Kombinationen und Mengenverhältnissen enthalten, mit der Maßgabe, daß eine Komponente nicht gleichzeitig die Bestandteile II, III und IV enthält.

Bestandteil (II) der erfindungsgemäßen Siliconkautschukmassen ist ein mindestens zwei Alkenylgruppen pro Molekül enthaltendes Polyorganosiloxan mit einer Viskosität bei 25°C im Bereich von 0,1 bis 1000 Pa.s, vorzugsweise von 1 bis 100 Pa.s.

Das Polyorganosiloxan (II) ist aufgebaut aus Einheiten der Formel

$$R^4{}_aR^5{}_bSiO_{(4-a-b)/2'}$$

wobei a 0, 1 oder 2 ist, b 0, 1, 2 oder 3 ist, mit der Maßgabe, daß mindestens zwei Reste $R^4$ in jedem Molekül vorhanden sind und die Summe $(a+b) < 4$ beträgt.

$R^4$ stellt eine Alkenylgruppe dar. Als Alkenylgruppen können sämtliche einer Hydrosilylierungsreaktion mit einem SiH-funktionellen Vernetzungsmittel zugänglichen Alkenylgruppen gewählt werden. Vorzugsweise werden Alkenylgruppen mit 2 bis 6 Kohlenstoffatomen, wie Vinyl, Allyl, Methallyl, 1-Propenyl, 5-Hexenyl, Ethenyl, Butadienyl, Hexadienyl, Cyclopentenyl, Cyclopentadienyl, Cyclohexenyl, vorzugsweise Vinyl und Allyl, verwendet.

$R^5$ stellt einen substituierten oder nichtsubstituierten, aliphatisch gesättigten, monovalenten Kohlenwasserstoffrest mit 1 bis 10 Kohlenstoffatomen, vorzugsweise 1 bis 6 Kohlenstoffatomen, dar. Beispiele hierfür sind die Alkylgruppen, wie Methyl, Ethyl, Propyl, Butyl und Hexyl, Cycloalkylgruppen, wie Cyclopentyl, Cyclohexyl und Cycloheptyl, Aryl- und Alkarylgruppen, wie Phenyl, Tolyl, Xylyl, Mesityl, Benzyl, beta-Phenylethyl und Naphthyl, oder halogensubstituierte Gruppen, wie 3,3,3-Trifluorpropyl, o-, p- und m-Chlorphenyl, Bromtolyl und beta-Cyanethyl.

Die Alkenylgruppen können in jeder Position der Polymerkette, insbesondere an den endständigen Siliciumatomen, gebunden sein.

Bestandteil (II) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane kann linear, cyclisch oder auch verzweigt sein. Verzweigte Polyorganosiloxane enthalten neben monofunktionellen Einheiten, wie $R^4R^5{}_2SiO_{1/2}$ und $R^5{}_3SiO_{1/2}$, und difunktionellen Einheiten, wie $R^5{}_2SiO_{2/2}$ und $R^4R^5SiO_{2/2}$, auch trifunktionelle Einheiten, wie $R^5SiO_{3/2}$ und $R^4SiO_{3/2}$, und/oder tetrafunktionelle Einheiten der Formel $SiO_{4/2}$, wobei $R^4$ und $R^5$ die oben dafür angegebene Bedeutung haben. Der Gehalt an diesen zu verzweigten Polyorganosiloxanen führenden tri- und/oder tetrafunktionellen Einheiten, der typischerweise sehr gering ist, d.h. weniger als 0,1 Mol-% beträgt, sollte 20 Mol-% nicht wesentlich überschreiten. Das Alkenylgruppen enthaltende Polyorganosiloxan kann auch Einheiten der allgemeinen Formel $-OSi(R^6R^7)R^8Si(R^6R^7)O-$ enthalten, wobei sowohl $R^6$ als auch $R^7$ die vorstehend für $R^4$ und $R^5$ angegebene Bedeutung haben und $R^8$ einen bivalenten organischen Rest, wie Ethylen, Propylen, Phenylen, Diphenylen oder Polyoxymethylen, bezeichnet. Derartige Einheiten können bis zu einem Anteil von 50 Mol-% im Bestandteil (II) enthalten sein.

Besonders bevorzugt ist die Verwendung Vinylgruppen enthaltender Polydimethylsiloxane, deren Moleküle der Formel

$(ViMe_2SiO_{1/2})_2(ViMeSiO)_a(Me_2SiO)_b$

entsprechen, wobei a und b nichtnegative Zahlen sind und folgende Relationen erfüllen: $a+1>0$, $50<(a+b)<2200$, vorzugsweise $200<(a+b)<1000$, und $0<(a+1)/(a+b)<0,2$. Bestandteil (III) der erfindungsgemäßen Siliconkautschukmasse ist ein SiH-funktionelles Polyorganosiloxan, das aufgebaut ist aus Einheiten der nachfolgenden Formel

$H_cR^5{}_dSiO_{(4-c-d)/2'}$,

wobei c 0, 1 oder 2 ist, d 0, 1, 2 oder 3 ist, mit der Maßgabe, daß die Summe $(c+d) < 4$ ist und daß mindestens zwei siliciumgebundene Wasserstoffatome pro Molekül vorhanden sind.

Bevorzugt ist die Verwendung eines drei oder mehr SiH-Bindungen pro Molekül enthaltenden Polyorganosiloxans. Bei Verwendung eines nur zwei SiH-Bindungen pro Molekül aufweisenden Bestandteils (III) enthält das Alkenylgruppen enthaltende Polyorganosiloxan (II) vorzugsweise mindestens drei Alkenylgruppen pro Molekül.

Das Polyorganosiloxan (III) wird als Vernetzer eingesetzt. Der Wasserstoffgehalt des Vernetzers, welcher sich ausschließlich auf die direkt an Siliciumatome gebundenen Wasserstoffatome bezieht, liegt im Bereich von 0,002 bis 1,7 Gew.-% Wasserstoff, vorzugsweise zwischen 0,1 und 1,7 Gew.-% Wasserstoff.

Das Polyorganosiloxan (III) enthält vorzugsweise mindestens drei und vorzugsweise höchstens 600 Siliciumatome pro Molekül. Besonders bevorzugt ist die Verwendung von SiH-Vernetzern, die zwischen 4 und 200 Siliciumatome pro Molekül enthalten.

Die Struktur des Polyorganosiloxans (III) kann linear, verzweigt, cyclisch oder netzwerkartig sein. Lineare und cyclische Polyorganosiloxane (III) sind aus Einheiten der Formel $HR^5{}_2SiO_{1/2}$, $R^5{}_3SiO_{1/2}$, $HR^5SiO_{2/2}$ und $R^5{}_2SiO_{2/2}$ zusammengesetzt, wobei $R^5$ die vorstehend dafür angegebene Bedeutung hat. Verzweigte und netzwerkartige Polyorganosiloxane (III) enthalten zusätzlich trifunktionelle Einheiten, wie $HSiO_{3/2}$ und $R^5SiO_{3/2}$, und/oder tetrafunktionelle Einheiten der Formel $SiO_{4/2}$. Mit zunehmendem Gehalt an tri- und/oder tetrafunktionellen Einheiten weisen diese Vernetzungsmittel eine netzwerkartige, harzartige Struktur auf. Die im Polyorganosiloxan (III) enthaltenen organischen Reste $R^5$ werden üblicherweise so gewählt, daß diese mit den im Bestandteil (II) befindlichen organischen Resten verträglich sind, so daß die Bestandteile (II) und (III) mischbar sind.

Als Vernetzer können auch Kombinationen und Mischungen der hier beschriebenen Pole ganosiloxane (III) verwendet werden.

Besonders bevorzugte Polyorganosiloxane (III) haben die Formel

$(HR^5{}_2SiO_{1/2})_e(R^5{}_3SiO_{1/2})_f(HR^5SiO_{2/2})_g(R^5{}_2SiO_{2/2})_h$,

wobei die nichtnegativen ganzen Zahlen e, f, g und h folgende Relationen erfüllen: $(e+f)=2$, $(e+g)>2$, $5<(g+h)<200$ und $0,1<g/(g+h)\leq 1$.

Das Polyorganosiloxan (III) ist vorzugsweise in einer solchen Menge in der härtbaren Siliconkautschukmasse enthalten, daß das Molverhältnis von SiH-Gruppen zu Alkenylgruppen zwischen 0,5 und 5, vorzugsweise zwischen 1,0 und 3,0, liegt.

Bestandteil (IV) dient als Katalysator für die Additionsreaktion (Hydrosilylierung) zwischen den Alkenylgruppen des Bestandteils (II) und den siliciumgebundenen Wasserstoffatomen des Bestandteils (III). In der Literatur wurden zahlreiche geeignete Hydrosilylierungskatalysatoren beschrieben. Prinzipiell können alle üblicherweise in additionsvernetzenden Siliconkautschukmassen eingesetzten Hydrosilylierungskatalysatoren verwendet werden.

Als Hydrosilylierungskatalysator können Metalle, wie Platin, Rhodium, Palladium, Ruthenium und Iridium, vorzugsweise Platin, die ggf. auf feinteiligen Trägermaterialien, wie Aktivkohle, Aluminiumoxid oder Siliciumdioxid, fixiert sind, eingesetzt werden.

Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln $(PtCl_2 \cdot Olefin)_2$ und $H(PtCl_3 \cdot Olefin)$ verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel

$(PtCl_2 \cdot C_3H_6)_2$, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbikarbonat in ethanolischer Lösung. Besonders bevorzugt sind Komplexe des Platins mit Vinylsiloxanen, wie sym-Divinyltetramethyldisiloxan.

Der Hydrosilylierungskatalysator kann auch in mikroverkapselter Form eingesetzt werden, wobei der den Katalysator enthaltende und im Polyorganosiloxan unlösliche feinteilige Feststoff beispielsweise ein Thermoplast (Polyesterharze, Siliconharze) ist. Der Hydrosilylierungskatalysator kann auch in Form einer Einschlußverbindung, beispielsweise in einem Cyclodextrin, eingesetzt werden.

Die Menge des eingesetzten Hydrosilylierungskatalysators richtet sich nach der gewünschten Vernetzungsgeschwindigkeit sowie ökonomischen Gesichtspunkten. Bei Verwendung gebräuchlicher Platin-Katalysatoren liegt der Gehalt in den härtbaren Siliconkautschukmassen bezogen auf Platin-Metall vorzugsweise im Bereich von 0,1 bis 500 Gew.-ppm, vorzugsweise zwischen 10 und 100 Gew.-ppm Platin-Metall.

Während die Bestandteile (I) bis (IV) notwendige Bestandteile der erfindungsgemäßen Siliconkautschukmasse sind, können wahlweise weitere Zusätze zu einem Anteil von bis zu 50 Gew.-%, vorzugsweise zwischen 1 und 20 Gew.-%, in der Siliconkautschukmasse enthalten sein. Diese Zusätze können z.B. Füllstoffe, Dispergierhilfsmittel, Haftvermittler, Inhibitoren, Pigmente, Farbstoffe, Weichmacher usw. sein.

Beispiele für Füllstoffe sind verstärkende Füllstoffe, also Füllstoffe mit einer spezifischen Oberfläche nach BET von mindestens 50 $m^2/g$, vorzugsweise 50 - 500 $m^2/g$, wie pyrogen erzeugte Kieselsäure, unter Erhalt der Struktur entwässerte Kieselsäurehydrogele, also sogenannte "Aerogele", und andere Arten von gefälltem Siliciumdioxid; und nicht verstärkende Füllstoffe, also Füllstoffe mit einer spezifischen Oberfläche nach BET von weniger als 50 $m^2/g$, wie Quarzmehl, Diatomeenerde, Calciumsilikat, Zirkoniumsilikat, Zeolithe, Eisenoxid, Zinkoxid, Titandioxid, Aluminiumoxid, Calciumcarbonat, Magnesiumcarbonat, Zinkcarbonat, Ruß, Glimmer und Kreide. Die genannten Füllstoffe können hydrophobiert sein durch die Behandlung mit den vorstehend genannten Hydrophobierungsmitteln.

Beispiele für Weichmacher sind bei Raumtemperatur flüssige, durch Triorganosiloxygruppen endblockierte Diorganopolysiloxane, wie durch Trimethylsiloxygruppen endblockierte Dimethylpolysiloxane mit einer Viskosität von 10 bis 10 000 mPa•s bei 25 °C.

Hierzu zählen Zusätze, wie Quarzmehl, Diatomeenerde, Tone, Kreide, Lithopone, Ruße, Graphit, Metalloxide, -karbonate, -sulfate, Metallstäube, Fasern, Farbstoffe, Pigmente usw.

Insbesondere können harzartige Polyorganosiloxane, die im wesentlichen aus Einheiten der Formeln $R^5{}_3SiO_{1/2}$, $R^5SiO_{3/2}$ und/oder $SiO_{4/2}$, ggf. auch $R^5{}_2SiO_{2/2}$, bestehen, bis zu einem Anteil von 50 Gew.-%, vorzugsweise bis zu 20 Gew.-%, bezogen auf das Gesamtgewicht des Siliconkautschuks, enthalten sein. Das Molverhältnis zwischen monofunktionellen und tri- oder tetrafunktionellen Einheiten dieser harzartigen Polyorganosiloxane liegt vorzugsweise im Bereich von 0,5 : 1 bis 1,5 : 1. Es können auch funktionelle Gruppen, insbesondere Alkenylgruppen, in Form von $R^4R^5{}_2SiO_{1/2}$- und/oder $R^4R^5SiO_{2/2}$-Einheiten,enthalten sein.

Enthalten sein können insbesondere Zusätze, die der gezielten Einstellung der Verarbeitungszeit und Vernetzungsgeschwindigkeit der härtbaren Siliconkautschukmasse dienen. Diese an sich bekannten Inhibitoren und Stabilisatoren sind beispielsweise: acetylenische Alkohole, wie Ethinylcyclohexanol und 2-Methyl-3-butin-2-ol, Polymethylvinylcyclosiloxane, wie Methylvinylcyclotetrasiloxan, niedermolekulare Siloxanöle mit Vinyldimethylsiloxy-Endgruppen, Trialkylcyanurate, Alkylmaleate, wie Diallylmaleat und Dimethylmaleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, Benzotriazol, organische Sulfoxide, organische Amine und Amide, Phosphine, Phosphite, Nitrile, Diaziridine und Oxime.

Die Herstellung der erfindungsgemäßen Siliconkautschukmassen erfolgt vorzugsweise, indem in einem ersten Schritt der Füllstoff mit dem Alkenylgruppen enthaltenden Polyorganosiloxan (II) zu einem einheitlichen Gemisch vermischt wird. Die Einarbeitung des Füllstoffs in das Polyorganosiloxan erfolgt in einem geeigneten Mischer, z.B. einem Kneter.

Je nach Hydrophobizität des Füllstoffs (hydrophob oder hydrophil), lassen sich zwei Arten der Füllstoffeinarbeitung unterscheiden.

Verfahren A)

Hydrophobe Füllstoffe, wie die erfindungsgemäße Kieselsäure, können direkt, d.h. ohne weitere Zusätze, mit dem Alkenylgruppen enthaltenden Polyorganosiloxan (II) vermischt werden. Erhöhte Temperaturen sowie ein möglichst hoher Füllstoffgehalt während des Vermischens wirken sich vorteilhaft auf die Dispergiergeschwindigkeit und Dispergiergüte des Füllstoffs im Polyorganosiloxan (II) aus. Das Einmischen des Füllstoffs in das Polyorganosiloxan (II) erfolgt aus diesem Grund vorzugsweise bei einer Temperatur im

Bereich von 100 ° C bis 200 ° C, insbesondere von 140 ° C bis 160 ° C. Vorteilhafteweise wird zunächst durch sukzessives Zumischen des Füllstoffs zu einer geeigneten Teilmenge des Polyorganosiloxans (II) eine möglichst hochviskose Mischung hergestellt, die durch Anwendung ausreichend hoher Scherkräfte eine optimale Destrukturierung und Dispergierung des Füllstoffs ermöglicht. Die hochviskose Mischung wird meistens während 0,5 bis 5 Stunden bei obigen Temperaturen, ggf. unter Vakuum, geschert. Die Dauer des Mischprozesses ist abhängig u.a. von der Menge, der Viskosität und den Scherparametern. Anschließend wird durch Zugabe der restlichen Polyorganosiloxanmenge und intensives Vermischen der gewünschte Füllstoffgehalt eingestellt. Der Füllstoffgehalt liegt im Bereich von 10 bis 50 Gew.-%. Die Viskosität der auf diese Weise hergestellten homogenen füllstoffhaltigen Polyorganosiloxanmasse liegt typischerweise bei 0,5 bis 5000 Pa.s bei einem Füllstoffgehalt von ca. 30 Gew.-% und bei einer Temperatur von 25 ° C.

Verfahren B)

Hydrophile Füllstoffe werden mit dem Alkenylgruppen enthaltenden Polyorganosiloxan in Anwesenheit eines geeigneten Hydrophobierungsmittels vermischt. Geeignete Hydrophobierungsmittel sind vorstehend beschrieben. Die im Hydrophobierungsmittel enthaltenen organischen Reste werden vorteilhafterweise so gewählt, daß diese mit den im Bestandteil (II) befindlichen organischen Resten weitgehend verträglich sind, was eine optimale Dispergierung des Füllstoffs im Polyorganosiloxan erleichtert. Durch Zugabe geringer Mengen Wasser kann der Hydrophobierungsprozeß beschleunigt werden.

100 Gewichtsteile Polyorganosiloxan können mit 1 bis 100 Gewichtsteilen Füllstoff, vorzugsweise mit 30 bis 80 Gewichtsteilen Füllstoff, vermischt werden. Die einzusetzende Menge an Hydrophobierungsmittel richtet sich u.a. nach der Art des Hydrophobierungsmittels, dem Füllstoffgehalt der Mischung sowie dem Silanolgruppengehalt des Füllstoffs. Bei Verwendung von Hexamethyldisilazan liegt die Einsatzmenge im Bereich von 1 bis 20 Gew.-%, vorzugsweise von 5 bis 10 Gew.-%, bezogen auf die Füllstoff/Polyorganosiloxan-Mischung. Wasser kann zu 5 bis 100 Gew.-%, bezogen auf die Menge an Hydrophobierungsmittel, zwecks Beschleunigung des Reaktionsablaufs zugegeben werden. Gebildete Nebenprodukte, wie Ammoniak, Alkohole und Hexamethyldisiloxan, und andere flüchtige Bestandteile, wie Wasser und niedermolekulare Organosiloxane, werden im Anschluß an die in situ-Hydrophobierung des Füllstoffs durch eine Hitzebehandlung des Gemisches bei einer Temperatur im Bereich von 120 ° C bis 200 ° C während 2 bis 8 Stunden, vorzugsweise im Bereich von 130 ° C bis 160 ° C während 3 bis 5 Stunden, vorteilhafterweise unter Vakuum und fortwährendem Kneten, entfernt.

Es wird eine homogene, füllstoffhaltige Masse erhalten, deren Viskosität bei 25 ° C typischerweise zwischen 0,5 und 5000 Pa.s bei einem Füllstoffgehalt von ca. 30 Gew.-% liegt.

In einem zweiten Schritt werden durch Zumischen eines SiH-funktionellen Vernetzers als Bestandteil II, eines Hydrosilylierungskatalysators sowie ggf. sonstiger Zusätze in die nach Verfahren A) oder B) hergestellten füllstoffhaltigen Polyorganosiloxanmassen zwei Komponenten A und B hergestellt, wobei jede der Komponenten alle oder einen Teil der Bestandteile (I) bis (IV) und gegebenenfalls Zusätze enthalten kann, mit der Maßgabe, daß keine Komponente gleichzeitig die Bestandteile II, III und IV enthält. Zweckmäßig und bevorzugt ist die Auftrennung in eine das SiH-funktionelle Vernetzungsmittel enthaltende und eine den Hydrosilylierungskatalysator enthaltende Komponente, so daß erst nach Vermischen derselben eine Aushärtung der Masse zu einem Siliconkautschuk erfolgen kann.

Die erfindungsgemäßen Siliconkautschukmassen eignen sich besonders zur Herstellung hochtemperaturbeständiger Siliconkautschukgegenstände, wie Dichtungen, Dichtungsmaterialien, elektrischer Isolationsmaterialien, hitzebeanspruchter Transportbänder, Walzenbelägen, Schläuchen, Folien usw.

## Beispiele

In den nachstehend beschriebenen Beispielen beziehen sich alle Viskositätsangaben auf eine Temperatur von 25 ° C. Sofern nicht anders angegeben, werden die nachstehenden Beispiele bei einem Druck der umgebenden Atmosphäre, also etwa bei 1000 hPa, und bei Raumtemperatur, also bei etwa 20 ° C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

Des weiteren werden die folgenden Abkürzungen verwendet:

Me: Methylrest
Et: Ethylrest
h : Stunde
d : Tag

**Beispiel 1: Herstellung der übergangsmetallhaltigen Kieselsäure**

Die erfindungsgemäßen übergangsmetallhaltigen hydrophoben Kieselsäuren sind durch einen "*" markiert.

A. Zu 100 g einer pyrogenen Kieselsäure mit einer spezifischen Oberfläche nach BET von 300 $m^2/g$ (erhältlich bei Fa. Wacker als Wacker HDK$^R$ T30) wurden 10 g einer 0,1 n wäßrigen Salzsäure mit einem Gehalt von 24,2 g/kg Eisen(III)chlorid-Hexahydrat bei 25 °C zugemischt. Nach 30 Minuten Homogenisieren bei 25 °C und 2 Stunden Ausheizen bei Normaldruck unter Stickstoffstrom bei 300 °C wurde ein rötlich-braunes Pulver erhalten.

B*. Zu 100 g einer pyrogenen Kieselsäure mit einer spezifischen Oberfläche nach BET von 300 $m^2/g$ (erhältlich bei Fa. Wacker als Wacker HDK$^R$ T30) wurden 10 g einer 0,1 n wäßrigen Salzsäure mit einem Gehalt von 24,2 g/kg Eisen(III)chlorid-Hexahydrat sowie anschließend 45 g Hexamethyldisilazan bei 25 °C zugemischt. Nach 30 Minuten Homogenisieren bei 25 °C und 1 Stunde Ausheizen bei Normaldruck unter Stickstoffstrom bei 150 °C sowie 2 Stunden Ausheizen bei Normaldruck unter Stickstoffstrom bei 300 °C wurde ein weißes Pulver erhalten.

C. Zu 100 g einer pyrogenen Kieselsäure mit einer spezifischen Oberfläche nach BET von 300 $m^2/g$ (erhältlich bei Fa. Wacker als Wacker HDK$^R$ T30) wurden 10 g einer 0,1 n wäßrigen Salzsäure mit einem Gehalt von 242 g/kg Eisen(III)chlorid-Hexahydrat bei 25 °C zugemischt. Nach 30 Minuten Homogenisieren bei 25 °C und 2 Stunden Ausheizen bei Normaldruck unter Stickstoffstrom bei 300 °C wurde ein rötlich-braunes Pulver erhalten.

D*. Zu 100 g einer pyrogenen Kieselsäure mit einer spezifischen Oberfläche nach BET von 300 $m^2/g$ (erhältlich bei Fa. Wacker als Wacker HDK$^R$ T30) wurden 10 g einer 0,1 n wäßrigen Salzsäure mit einem Gehalt von 242 g/kg Eisen(III)chlorid-Hexahydrat sowie anschließend 45 g Hexamethyldisilazan bei 25 °C zugemischt. Nach 30 Minuten Homogenisieren bei 25 °C und 1 Stunde Ausheizen bei Normaldruck unter Stickstoffstrom bei 150 °C sowie 2 Stunden Ausheizen bei Normaldruck unter Stickstoffstrom bei 300 °C wurde ein weitgehend weißes Pulver erhalten.

E*. Zu 100 g einer pyrogenen Kieselsäure mit einer spezifischen Oberfläche nach BET von 200 $m^2/g$ (erhältlich bei Fa. Wacker als Wacker HDK$^R$ N20) wurden 10 g einer 0,01 n wäßrigen Salzsäure mit einem Gehalt von 4,8 g/kg Eisen(III)chlorid-Hexahydrat sowie anschließend 16,2 g Dimethyldichlorsilan bei 25 °C zugemischt. Nach 15 Minuten Homogenisieren bei 25 °C und 1 Stunde Ausheizen bei Normaldruck unter Stickstoffstrom bei 250 °C wurde ein weißes Pulver erhalten.

F. Zu 100 g einer pyrogenen Kieselsäure mit einer spezifischen Oberfläche nach BET von 300 $m^2/g$ (erhältlich bei Fa. Wacker als Wacker HDK$^R$ T30) wurden 10 g einer 0,1 n wäßrigen Salzsäure mit einem Gehalt von 13,4 g/kg Kupfer(II)chlorid-Dihydrat bei 25 °C zugemischt. Nach 30 Minuten Homogenisieren bei 25 °C und 2 Stunden Ausheizen bei Normaldruck unter Stickstoffstrom bei 300 °C wurde ein fahlbläuliches Pulver erhalten.

G*. Zu 100 g einer pyrogenen Kieselsäure mit einer spezifischen Oberfläche nach BET von 300 $m^2/g$ (erhältlich bei Fa. Wacker als Wacker HDK$^R$ T30) wurden 10 g einer 0,1 n wäßrigen Salzsäure mit einem Gehalt von 13,4 g/kg Kupfer(II)chlorid-Dihydrat sowie anschließend 45 g Hexamethyldisilazan bei 25 °C zugemischt. Nach 30 Minuten Homogenisieren bei 25 °C und 1 Stunde Ausheizen bei Normaldruck unter Stickstoffstrom bei 150 °C sowie 2 Stunden Ausheizen bei Normaldruck unter Stickstoffstrom bei 300 °C wurde ein weißes Pulver erhalten.

H. Zu 100 g einer pyrogenen Kieselsäure mit einer spezifischen Oberfläche nach BET von 300 $m^2/g$ (erhältlich bei Fa. Wacker als Wacker HDK$^R$ T30) wurden 10 g einer 0,1 n wäßrigen Lösung von 13,3 g/kg Cer(III)chlorid-Heptahydrat bei 25 °C zugemischt. Nach 30 Minuten Homogenisieren bei 25 °C und 1 Stunden Ausheizen bei Normaldruck unter Stickstoffstrom bei 200 °C wurde ein weißes Pulver mit leicht gelblichem Farbstich erhalten.

I*. Zu 100 g einer pyrogenen Kieselsäure mit einer spezifischen Oberfläche nach BET von 300 $m^2/g$ (erhältlich bei Fa. Wacker als Wacker HDK$^R$ T30) wurden 10 g einer 0,1 n wäßrigen Lösung von 13,3 g/kg Cer(III)chlorid-Heptahydrat sowie anschließend 45 g Hexamethyldisilazan bei 25 °C zugemischt. Nach 30 Minuten Homogenisieren bei 25 °C und 1 Stunde Ausheizen bei Normaldruck unter Stickstoffstrom bei 150 °C sowie 1 Stunde Ausheizen bei Normaldruck unter Stickstoffstrom bei 200 °C wurde ein weißes Pulver erhalten.

J. Zu 100 g einer pyrogenen Kieselsäure mit einer spezifischen Oberfläche nach BET von 300 $m^2/g$ (erhältlich bei Fa. Wacker als Wacker HDK$^R$ T30) wurden 10 g einer 0,1 n wäßrigen Salzsäure mit einem Gehalt von 18,0 g/kg Mangan(II)chlorid-Tetrahydrat bei 25 °C zugemischt. Nach 30 Minuten Homogenisieren bei 25 °C und 2 Stunden Ausheizen bei Normaldruck unter Stickstoffstrom bei 250 °C wurde ein bräunliches Pulver erhalten.

K*. Zu 100 g einer pyrogenen Kieselsäure mit einer spezifischen Oberfläche nach BET von 300 $m^2/g$ (erhältlich bei Fa. Wacker als Wacker HDK$^R$ T30) wurden 10 g einer 0,1 n wäßrigen Salzsäure mit einem Gehalt von 18,0 g/kg Mangan(II)chlorid-Tetrahydrat sowie anschließend 45 g Hexamethyldisilazan bei 25 °C zugemischt. Nach 30 Minuten Homogenisieren bei 25 °C und 1 Stunde Ausheizen bei Normaldruck unter Stickstoffstrom bei 150 °C sowie 2 Stunden Ausheizen bei Normaldruck unter Stickstoffstrom bei 250 °C wurde ein weitgehend weißes Pulver erhalten.

L. Zu 100 g einer pyrogenen Kieselsäure mit einer spezifischen Oberfläche nach BET von 300 $m^2/g$ (erhältlich bei Fa. Wacker als Wacker HDK$^R$ T30) wurden 10 g einer 0,1 n wäßrigen Salzsäure mit einem Gehalt von 20,2 g/kg Nickel(II)chlorid-Hexahydrat bei 25 °C zugemischt. Nach 30 Minuten Homogenisieren bei 25 °C und 2 Stunden Ausheizen bei Normaldruck unter Stickstoffstrom bei 250 °C wurde ein weißes Pulver mit leicht grünlichem Farbstich erhalten.

M*. Zu 100 g einer pyrogenen Kieselsäure mit einer spezifischen Oberfläche nach BET von 300 $m^2/g$ (erhältlich bei Fa. Wacker als Wacker HDK$^R$ T30) wurden 10 g einer 0,1 n wäßrigen Salzsäure mit einem Gehalt von 20,2 g/kg Nickel(II)chlorid-Hexahydrat sowie anschließend 45 g Hexamethyldisilazan bei 25 °C zugemischt. Nach 30 Minuten Homogenisieren bei 25 °C und 1 Stunde Ausheizen bei Normaldruck unter Stickstoffstrom bei 150 °C sowie 2 Stunden Ausheizen bei Normaldruck unter Stickstoffstrom bei 250 °C wurde ein weißes Pulver erhalten.

N. Zu 100 g einer pyrogenen Kieselsäure mit einer spezifischen Oberfläche nach BET von 300 $m^2/g$ (erhältlich bei Fa. Wacker als Wacker HDK$^R$ T30) wurden 10 g einer Lösung von 35,5 g/l Tetra-n-butoxy-Titan(IV) in Hexamethyldisiloxan bei 25 °C zugemischt. Nach 30 Minuten Homogenisieren bei 25 °C und 1 Stunde Ausheizen bei Normaldruck unter Stickstoffstrom bei 150 °C sowie 2 Stunden Ausheizen bei Normaldruck unter Stickstoffstrom bei 250 °C wurde ein weißes Pulver erhalten.

O*. Zu 100 g einer pyrogenen Kieselsäure mit einer spezifischen Oberfläche nach BET von 300 $m^2/g$ (erhältlich bei Fa. Wacker als Wacker HDK$^R$ T30) wurden 10 g einer Lösung von 35,5 g/l Tetra-n-butoxy-Titan(IV) in Hexamethyldisiloxan sowie anschließend 45 g Hexamethyldisilazan bei 25 °C zugemischt. Nach 30 Minuten Homogenisieren bei 25 °C und 1 Stunde Ausheizen bei Normaldruck unter Stickstoffstrom bei 150 °C sowie 2 Stunden Ausheizen bei Normaldruck unter Stickstoffstrom bei 250 °C wurde ein weißes Pulver erhalten.

P*. Zu 150 g einer pyrogenen Kieselsäure mit einer spezifischen Oberfläche nach BET von 300 $m^2/g$ (erhältlich bei Fa. Wacker als Wacker HDK$^R$ T30P), suspendiert in 1000 g Hexamethyldisiloxan, wurden unter Rühren 7,67 g einer wäßrigen Lösung von 15,1 g/kg Cer(III)chlorid-Heptahydrat sowie anschließend 22,5 g Hexamethyldisilazan bei 25 °C zugemischt. Nach 120 Minuten Rühren bei 60 °C, Abziehen des Lösemittels am Rotationsverdampfer bei 60 °C und einem Druck bis kleiner als 15 hPa sowie 2 Stunden Ausheizen bei Normaldruck unter Stickstoffstrom bei 150 °C wurde ein weißes Pulver erhalten.

Q. Zu 150 g einer pyrogenen Kieselsäure mit einer spezifischen Oberfläche nach BET von 300 $m^2/g$ (erhältlich bei Fa. Wacker als Wacker HDK$^R$ T30P), suspendiert in 1000 g Hexamethyldisiloxan, wurden unter Rühren 7,77 g einer wäßrigen Lösung von 26,5 g/kg Cer(III)chlorid-Heptahydrat zugemischt. Nach 120 Minuten Rühren bei 60 °C, Abziehen des Lösemittels am Rotationsverdampfer bei 60 °C und einem Druck bis kleiner als 15 hPa sowie 2 Stunden Ausheizen bei Normaldruck unter Stickstoffstrom bei 150 °C wurde ein leicht gelbliches Pulver erhalten.

R*. Zu 150 g einer pyrogenen Kieselsäure mit einer spezifischen Oberfläche nach BET von 300 $m^2/g$ (erhältlich bei Fa. Wacker als Wacker HDK$^R$ T30P), suspendiert in 1000 g Hexamethyldisiloxan, wurden unter Rühren 7,77 g einer wäßrigen Lösung von 26,5 g/kg Cer(III)chlorid-Heptahydrat sowie anschließend 22,5 g Hexamethyldisilazan bei 25 °C zugemischt. Nach 120 Minuten Rühren bei 60 °C, Abziehen des Lösemittels am Rotationsverdampfer bei 60 °C und einem Druck bis kleiner als 15 hPa sowie 2 Stunden Ausheizen bei Normaldruck unter Stickstoffstrom bei 150 °C wurde ein weißes Pulver erhalten.

**Tabelle I**

Analysendaten der übergangsmetallhaltigen Füllstoffe A bis R*

| Probe | Kohlenstoffgehalt (Masse-%) | Wasser-benetzbarkeit[1]) | Wasser-benetzbarkeit nach 48 Stunden in Wasser bei 100°C [2]) | Metallgehalt | Farbe |
|---|---|---|---|---|---|
| A | 0,01 | ja | ja | 490 ppm Fe | rot-braun |
| B* | 3,5 | nein | nein | 460 ppm Fe | weiß |
| C | 0,01 | ja | ja | 5000 ppm Fe | rot-braun |
| D* | 3,5 | nein | nein | 4700 ppm Fe | weiß |
| E* | 5,5 | nein | nein | 440 ppm Fe | weiß |
| F | 0,02 | ja | ja | 470 ppm Cu | bläulich |
| G* | 3,8 | nein | nein | 440 ppm Cu | weiß |
| H | 0,01 | ja | ja | 450 ppm Ce | weiß-gelblich |
| I* | 3,7 | nein | nein | 440 ppm Ce | weiß |
| J | 0,01 | ja | ja | 440 ppm Mn | braun |
| K* | 3,6 | nein | nein | 410 ppm Mn | weiß |

| Probe | Kohlenstoffgehalt (Masse-%) | Wasser-benetzbarkeit[1]) | Wasser-benetzbarkeit nach 48 Stunden in Wasser bei 100°C [2]) | Metallgehalt | Farbe |
|---|---|---|---|---|---|
| L | 0,01 | ja | ja | 470 ppm Ni | weiß-grünlich |
| M* | 3,8 | nein | nein | 450 ppm Ni | weiß |
| N | 0,33 | ja | ja | 420 ppm Ti | weiß |
| O* | 3,9 | nein | nein | 410 ppm Ti | weiß |
| P* | 3,9 | nein | nein | 250 ppm Ce | weiß |
| Q | 0,01 | ja | ja | 450 ppm Ce | gelblich-weiß |
| R* | 3,9 | nein | nein | 420 ppm Ce | weiß |

1) Keine Wasserbenetzbarkeit des Füllstoffs:
Intensives Schütteln des Füllstoffs zu gleichen Volumenteilen mit Wasser in einem Reagenzglas; die unterständige wäßrige Phase bleibt völlig klar.
Wasserbenetzbarkeit des Füllstoffs:
Intensives Schütteln des Füllstoffs zu gleichen Volumenteilen mit Wasser in einem Reagenzglas: Die unterständige wäßrige Phase wird getrübt.

2) Keine Wasserbenetzbarkeit des Füllstoffs nach 48 Stunden in Wasser bei 100°C:
Beheizter 1-l-Kolben mit Rückflußkühler, zu 1/2 mit Wasser gefüllt, überschichtet zu 1/4 mit Füllstoff, intensives Rühren des siedenden Wassers; die unterständige wäßrige Phase bleibt auch nach 48 Stunden völlig klar.
Wasserbenetzbarkeit des Füllstoffs nach 48 Stunden in Wasser bei 100°C:
Beheizter 1-l-Kolben mit Rückflußkühler, zu 1/2 mit Wasser gefüllt, überschichtet zu 1/4 mit Füllstoff, intensives Rühren des siedenden Wassers; die unterständige wäßrige Phase wird nach 48 Stunden getrübt.

**Beispiel 2**

Herstellung der härtbaren Siliconkautschukmassen

A) Herstellung der erfindungsgemäßen härtbaren Siliconkautschukmasse unter Verwendung eines hydrophoben Füllstoffs

230 Masseteile eines Vinyldimethylsiloxy-terminierten Polydimethylsiloxans, das bei 25 °C eine Viskosität von 20 Pa.s aufweist, wurden mit 160 Masseteilen des hydrophoben Füllstoffs, der Portionsweise zugegeben und eingemischt wurde, während 1 Stunde in einem Kneter zu einer homogenen Masse vermischt. Anschließend wurde diese Masse während 2 Stunden bei 150 °C unter Vakuum (<100 hPa) geknetet. Nach dieser Ausheizphase wurden nochmals 150 Masseteile des Vinyl-funktionellen Polyorganosiloxans eingemischt und die Masse während 1 Stunde homogenisiert. Es wurde eine homogene, ca. 30 Masse-% Füllstoff enthaltende Polyorganosiloxanmasse erhalten, deren Viskosität bei 25 °C im Bereich von 500 bis 1500 Pa.s lag.

B) Herstellung einer nicht erfindungsgemäßen härtbaren Siliconkautschukmasse unter Verwendung eines hydrophilen Füllstoffs

460 Masseteile eines Vinyldimethylsiloxy-terminierten Polyorganosiloxans, das bei 25 °C eine Viskosität von 20 Pa.s aufweist, wurden mit 80 Masseteilen Hexamethyldisilazan, 30 Masseteilen Wasser und 280 Masseteilen des hydrophilen Füllstoffs, der portionsweise zugegeben und eingemischt wird, bei Raumtemperatur während 1,5 Stunden in einem Kneter zu einer homogenen Masse vermischt. Zwecks Entfernung flüchtiger Bestandteile und Nebenprodukte wurde die Mischung anschließend während 2 Stunden bei

150 °C unter Vakuum (< 100 hPa) geknetet. Nach dieser Ausheizphase wurden weitere 200 Masseteile des Vinyl-funktionellen Polyorganosiloxans portionsweise eingemischt und die Masse während 1 Stunde homogenisiert. Es wurde eine homogene, ca. 30 Masse-% Füllstoff enthaltende Polyorganosiloxanmasse erhalten, deren Viskosität bei 25 °C im Bereich von 500 bis 1500 Pa.s lag.

C) Herstellung einer nicht erfindungsgemäßen, härtbaren Siliconkautschukmasse unter Verwendung einer hydrophilen metallfreien Kieselsäure

Zum Zwecke des Vergleichs wurde eine metallfreie, hydrophile, pyrogene Kieselsäure mit einer spezifischen Oberfläche nach BET von 300 $m^2/g$ (erhältlich bei Fa. Wacker als Wacker[R] HDK T30) nach Verfahren B) in ein Dimethylvinylsiloxy-endständiges Polydimethylsiloxan, das eine Viskosität von 20 Pa.s bei einer Temperatur von 25 °C aufweist, eingemischt und wie die unter Verwendung metallhaltiger Kieselsäuren hergestellten härtbaren Siliconkautschukmassen zu vernetzten Siliconkautschukproben weiterverarbeitet.

Um Vergleichbarkeit der nach Verfahren A), B) bzw. C) hergestellten füllstoffhaltigen Polyorganosiloxanmassen, insbesondere gleichen Gehalt an Kieselsäure als Füllstoff, zu gewährleisten, wurde berücksichtigt, daß bei der Hydrophobierung hydrophiler Füllstoffe erhebliche Mengen hydrophober Bestandteile auf die Oberfläche des Füllstoffs aufgebracht werden. Bei Verwendung von Hexamethyldisilazan handelt es sich dabei im wesentlichen um Trimethylsilyl-Gruppen. Bei Annahme eines Kohlenstoffgehalts des hydrophoben Füllstoffs von ca. 4 Masse-% (vgl. Tabelle I), besteht der hydrophobe Füllstoff folglich nur zu ca. 92 Masse-% aus $SiO_2$, während die restlichen 8 Masse-% der hydrophoben Oberflächenschicht entsprechen. Es wurde angenommen, daß auch bei einer Hydrophobierung des Füllstoffs gemäß Verfahren B) auf dem Füllstoff eine vergleichbare hydrophobe Oberflächenschicht verbleibt, die ca. 8 Masse-% des hydrophobierten Füllstoffs ausmacht. Unter Berücksichtigung dieses Sachverhaltes stimmen die nach Verfahren A), B) und C) hergestellten Mischungen sowohl hinsichtlich ihres Gehalts an Füllstoff, bezogen auf $SiO_2$, als auch im Metallgehalt (für ein gegebenes Metall) im Rahmen der gegebenen Fehlergrenzen überein.

Zur Herstellung der A-Komponente der härtbaren Siliconkautschukmasse wurden 100 Masseteile der nach Verfahren A), B) bzw. C) hergestellten Kieselsäure als Füllstoff enthaltende Siloxanmasse mit 0,2 Masseteilen einer 1 Masse-% Platin-Metall enthaltenden Lösung eines Platin-Katalysators (Lösung eines Platin-sym-Divinyltetramethyldisiloxan-Komplexes in einem Dimethylvinylsiloxy-endständigen Polydimethylsiloxan, das bei 25 °C eine Viskosität von 1000 mPa.s aufweist; erhältlich bei Fa. Wacker als Katalysator OL) und 0,1 Masseteilen des Inhibitors Ethinylcyclohexanol zu einer homogenen Masse vermischt.

Zur Herstellung der B-Komponente der härtbaren Siliconkautschukmasse wurden 100 Masseteile der nach Verfahren A), B) bzw. C) hergestellten füllstoffhaltigen Siloxanmasse mit 3,5 Masseteilen eines Mischpolymerisates aus Dimethylsiloxy-, Methylhydrogensiloxy- und Trimethylsiloxy-Einheiten mit einer Viskosität von 320 mPa.s bei 25 °C und 0,48 Masse-% Si-gebundenem Wasserstoff vermischt.

**Herstellung der vernetzten Siliconkautschuke**

Die Herstellung der vernetzten Siliconkautschuke erfolgt dadurch, daß A- und B-Komponente im Masseverhältnis 1 : 1 auf einer Walze bei einer Temperatur der Walzen von 25 °C während 15 Min. innig vermischt wurden. Diese Mischung wurde anschließend in einer hydraulischen Presse bei einer Temperatur von 170 °C während 15 Min. zum Siliconkautschuk vernetzt. Die entformten, ca. 2 mm bzw. 6 mm dicken Siliconkautschukfolien wurden einer 4 Stunden währenden Temperung bei 200 °C in einem sogenannten Umluft-Trockenschrank unterworfen.

Mechanische Werte der Siliconkautschuke vor und nach Hitzebeanspruchung

Die Thermostabilität der auf der Basis der erfindungsgemäßen Siliconkautschukmasse hergestellten Siliconkautschuke unter Verwendung der nach Verfahren A. bis R. hergestellten metallhaltigen, pyrogenen Kieselsäuren wurde anhand folgender Kriterien bewertet:

a) Mechanische Elastomereigenschaften, wie Shore-A-Härte (gemäß DIN 53 505), Reißfestigkeit (gemäß DIN 53 504-S1) und Reißdehnung (gemäß DIN 53 504-S1), vor und nach thermischer Beanspruchung der Siliconkautschukproben durch offene Lagerung während 50 Stunden bei einer Temperatur von 250 °C in einem Umluftschrank. Aus Tabelle II ist das unterschiedliche, mechanische Eigenschaftsbild der unter Verwendung hydrophiler bzw. hydrophober metallhaltiger Kieselsäuren A. bis R*. hergestellten Siliconkautschukproben ersichtlich. Insbesondere ist erkennbar, daß das mechanische Eigenschaftsbild der unter Verwendung hydrophober, metallhaltiger Kieselsäuren hergestellten Siliconkautschuke eine höhere Thermostabilität belegt (vgl. Tabelle II).

Tabelle II

| Mechanische Elastomereigenschaften vor und nach thermischer Beanspruchung | | | | | | |
|---|---|---|---|---|---|---|
| Kieselsäure | vor thermischer Beanspruchung | | | nach thermischer Beanspruchung | | |
| | Shore A | Reißfestigkeit ($N/mm^2$) | Reißdehnung | Shore A | Reißfestigkeit ($N/mm^2$) | Reißdehnung (%) |
| ohne Zusatz | 40 | 8,3 | 610 | 54 | 3,1 | 90 |
| A | 42 | 8,1 | 550 | 46 | 3,6 | 110 |
| B* | 43 | 8,4 | 560 | 47 | 6,3 | 180 |
| F | 45 | 7,6 | 520 | 45 | 3,8 | 200 |
| G* | 43 | 7,3 | 540 | 42 | 5,4 | 250 |
| H | 41 | 9,3 | 620 | 47 | 7,1 | 240 |
| I* | 40 | 7,3 | 560 | 40 | 7,4 | 350 |
| J | 48 | 8,1 | 460 | 44 | 5,8 | 210 |
| K* | 46 | 7,2 | 490 | 42 | 6,4 | 250 |
| N | 42 | 8,6 | 630 | 50 | 4,1 | 100 |
| O* | 43 | 9,5 | 620 | 49 | 6,3 | 170 |

b) Shore-A-Härte (gemäß DIN 53 505) der Siliconkautschukproben vor und nach thermischer Beanspruchung durch offene Lagerung während 10 d, 20 d, 30 d, 40 d, 50 d und 100 d, sofern die Probe nicht vorzeitig versprödet, bei einer Temperatur von 250°C in einem Umluftschrank. Shore A-Werte der unter Verwendung metallhaltiger Kieselsäuren hergestellten Siliconkautschuke vor und nach thermischer Beanspruchung sind exemplarisch in Tabelle III zusammengefaßt (vgl. Tabelle III).

**Tabelle III**

Shore-A-Härte vor und nach thermischer Beanspruchung

| Kieselsäure | ohne thermische Beanspruchung | 10d/250°C | 20d/250°C | 30d/250°C | 40d/250°C | 50d/250°C | 100d/250 |
|---|---|---|---|---|---|---|---|
| ohne Zusatz | 41 | 65 | 87 | spröde | - | - | - |
| C | 44 | 50 | 59 | 65 | 69 | 74 | 83 |
| D* | 43 | 45 | 54 | 58 | 61 | 66 | 74 |
| F | 44 | 55 | 63 | 68 | 71 | 74 | 81 |
| G* | 43 | 52 | 58 | 63 | 65 | 68 | 78 |
| H | 38 | 58 | 66 | 76 | 79 | 82 | 94 |
| I* | 39 | 57 | 63 | 71 | 73 | 75 | 84 |
| J | 47 | 46 | 52 | 59 | 61 | 68 | 83 |
| K* | 45 | 45 | 48 | 52 | 57 | 60 | 77 |
| N | 41 | 61 | 77 | 82 | 87 | 90 | spröde |
| O* | 43 | 63 | 72 | 76 | 79 | 84 | spröde |

c) Betrag des dynamischen Moduls unter Druckverformung (gemäß DIN 53 513; Mitteldehnung: -2 %; Dehnungsamplitude: 0,5 %; Meßfrequenz: 10 Hz). Die Modulmessungen erfolgen an zylinderförmigen Siliconkautschukprobekörpern (Höhe: 6 mm; Durchmesser: 10 mm), vor und nach thermischer Beanspruchung durch offene Lagerung während 5 d, 10 d, 20 d, 30 d und 40 d bei einer Temperatur von 250 °C in einem Umluftschrank. Pro Material wurden 5 Probekörper gemessen und der dynamische Modul

durch Bildung des arithmetischen Mittelwertes aus den Einzelmessungen bestimmt. Entsprechende Daten sind in Tabelle IV aufgelistet.

**Tabelle IV**

Dynamischer Modul (in MPa) vor und nach thermischer Beanspruchung

| Kiesel-säure | ohne thermische Beanspruchung | 5d/250°C | 10d/250°C | 20d/250°C | 30d/250°C | 40d/250°C |
|---|---|---|---|---|---|---|
| ohne Zusatz | 3,05 | 8,36 | 21,04 | 104,01 | 142,19 | spröde |
| C | 3,11 | 2,38 | 3,22 | 5,03 | 6,51 | 8,37 |
| D* | 3,07 | 2,20 | 2,93 | 4,18 | 5,19 | 6,42 |
| F | 3,95 | 3,29 | 4,21 | 5,63 | 7,32 | 8,40 |
| G* | 3,81 | 3,56 | 3,94 | 5,07 | 6,48 | 7,91 |
| H | 2,77 | 3,98 | 5,92 | 8,53 | 11,46 | 14,19 |
| I* | 2,89 | 4,81 | 6,31 | 8,29 | 10,75 | 12,82 |
| J | 3,70 | 2,93 | 2,95 | 3,78 | 4,83 | 6,23 |
| K* | 3,31 | 2,66 | 2,76 | 3,32 | 3,94 | 5,09 |
| L | 3,10 | 2,59 | 2,17 | 3,44 | 5,12 | 6,85 |
| M* | 3,29 | 2,51 | 2,48 | 3,37 | 4,40 | 5,63 |

d) Der prozentuale Masseverlust der unter c) beschriebenen zylinderförmigen Probekörper nach thermischer Beanspruchung durch offene Lagerung während 5 d, 10 d, 20 d, 30 d, 40 d und 50 d bei einer

Temperatur von 250 °C in einem Umluftschrank, wobei der prozentuale Masseverlust wiederum durch Bildung des arithmetischen Mittelwertes der pro Material vorgenommenen 5 Einzelmessungen erfolgte. Die prozentualen Masseverluste infolge thermischer Beanspruchung der unter Verwendung metallhaltiger Kieselsäuren hergestellten Siliconkautschukproben sind exemplarisch in Tabelle V zusammengefaßt.

**Tabelle V**

| | Prozentualer Masseverlust infolge thermischer Beanspruchung | | | | | |
|---|---|---|---|---|---|---|
| Kiesel-säure | 5d/250 °C Beanspruchung | 10d/250 °C | 20d/250 °C | 30d/250 °C | 40d/250 °C | 50d/250 °C |
| ohne Zusatz | 3,8 | 7,5 | 10,6 | 13,2 | spröde | - |
| F | 3,0 | 3,7 | 4,8 | 5,7 | 7,1 | 8,0 |
| G* | 2,4 | 3,2 | 4,2 | 5,3 | 6,5 | 6,9 |
| H | 3,7 | 4,2 | 6,1 | 7,5 | 9,4 | 10,8 |
| I* | 2,9 | 3,8 | 5,9 | 7,1 | 8,2 | 9,4 |
| J | 2,3 | 2,5 | 3,4 | 4,0 | 4,3 | 5,0 |
| K* | 2,4 | 2,5 | 3,1 | 3,5 | 4,0 | 4,7 |
| N | 2,3 | 3,0 | 4,6 | 6,1 | 8,4 | 11,5 |
| O* | 2,5 | 3,1 | 4,2 | 5,3 | 6,8 | 8,8 |

## Patentansprüche

1. Hydrophobe Kieselsäure mit einer spezifischen BET-Oberfläche von 40 bis 450 $m^2/g$, einem durch die Hydrophobierung erhaltenen Kohlenstoffgehalt von mindestens 0,5 Gew.-% und einem Gehalt an Übergangsmetall von 10 bis 10 000 Gew.-ppm.

2. Kieselsäure nach Anspruch 1, wobei das Übergangsmetall Cer, Eisen, Hafnium, Kupfer, Zink, Mangan, Nickel, Titan oder Zirkon ist.

3. Verfahren zur Herstellung der Kieselsäure nach Anspruch 1 oder 2, bei dem eine hydrophile Kieselsäure mit a) einer flüssigen oder in Wasser oder einem organischen Lösungsmittel gelösten Übergangsmetallverbindung und b) einem organischen oder siliciumorganischen Hydrophobierungsmittel vermischt wird.

4. Additionsvernetzende 2-Komponenten Siliconkautschukmassen, die die Kieselsäure nach Anspruch 1 oder 2 als Hitzestabilisator enthalten.

Europäisches Patentamt

# EUROPÄISCHER RECHERCHENBERICHT

Nummer der Anmeldung
EP 94 11 6548

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 493 263 (RHÔNE-POULENC CHIMIE)<br>* Seite 6, Zeile 16 - Zeile 17; Ansprüche 9,15,18,21,25; Tabelle I * | 1-3 | C09C1/30 |
| X | DATABASE WPI<br>Week 8331,<br>Derwent Publications Ltd., London, GB;<br>AN 83-727193<br>& SU-A-960 180 (KOKOZEI V. N.) 23. September 1982<br>* Zusammenfassung * | 1,2 | |
| X | DATABASE WPI<br>Week 7920,<br>Derwent Publications Ltd., London, GB;<br>AN 79-38608B<br>& SU-A-615 080 (CHUICO A. A.) 13. Juni 1978<br>* Zusammenfassung * | 1-3 | |
| A | EP-A-0 046 057 (THE BRITISH PETROLEUM COMPANY)<br>* Ansprüche 1-3,15 * | 1-4 | RECHERCHIERTE SACHGEBIETE (Int.Cl.6)<br>C09C |
| A | EP-A-0 033 843 (DEGUSSA)<br>* Seite 14, Zeile 8 - Zeile 16; Anspruch 1 * | 1,2,4 | |
| A | DD-A-266 578 (VEB)<br>* Ansprüche 1,2 * | 1,2,4 | |
| A | GB-A-917 831 (DOW CORNING)<br>* Seite 6, Zeile 16 - Zeile 29; Anspruch 1 * | 1,2,4 | |
| A | US-A-4 030 940 (A. A. CHUIKO ET AL.)<br>* Spalte 3, Zeile 62 - Zeile 66 * | 1,2 | |

Der vorliegende Recherchenbericht wurde für alle Patentansprüche erstellt

| Recherchenort | Abschlußdatum der Recherche | Prüfer |
|---|---|---|
| DEN HAAG | 30. Dezember 1994 | Van Bellingen, I |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument